# EUROPEAN PATENT SPECIFICATION

(11) **EP 3 518 487 B1**
(45) Date of publication and mention of the grant of the patent: **27.03.2024**
(21) Application number: 17852347.8
(22) Date of filing: 19.09.2017
(51) Int. Cl.: G06F 21/31, G06F 21/40, G06F 16/903, H04L 9/40

(54) **IDENTITY RECOGNITION METHOD AND DEVICE**
VERFAHREN UND VORRICHTUNG ZUR IDENTITÄTSERKENNUNG
PROCÉDÉ ET DISPOSITIF DE RECONNAISSANCE D'IDENTITÉ

(30) Priority: 26.09.2016 CN 201610851175
(43) Date of publication of application: 31.07.2019
(73) Proprietor: Advanced New Technologies Co., Ltd., George Town, Grand Cayman KY1-9008 (KY)
(72) Inventor: WANG, Jialei, Hangzhou Zhejiang 311121 (CN)
(74) Representative: Marks & Clerk LLP
(86) International application number: PCT/CN2017/102213
(87) International publication number: WO 2018/054279

(56) References cited:
- CN-A- 102 413 169
- CN-A- 104 598 498
- CN-A- 104 935 438
- CN-A- 105 678 129
- CN-A- 106 790 915
- CN-A- 107 026 831
- US-A1- 2012 226 701
- US-A1- 2014 237 570

## Description

### Technical Field

The present invention relates to network technologies, and in particular, to an identity recognition method and device.

### Background

With the developing trend of real name registration for Internet access in China, more and more Internet scenarios require real name authentication, in particular in the industries like finance and e-commerce. To hide their true identities against such a trend, swindlers who conduct cheating and fraudulent businesses often obtain a lot of other people's identity information through leakage of information on the Internet or volume purchase, assume the other people's ID numbers and names, and use mobile phone numbers under their control for account registration and authentication in Internet scenarios, committing fraudulence in credit applications such as credit card or loan applications, thereby causing losses of businesses and financial institutions.

Existing identity authentication manners are implemented for fraudulence recognition mainly on a network layer or device layer. For example, identity theft may be recognized by using a recognition model according to the IP address, MAC address, or device identifier like IMEI, of a device used by the person who steals the identity. However, many of the swindlers are professional hackers who have strong network skills and can bypass existing identity recognition models by executing some strategies and make it very difficult to recognize identities.

US2014/237570 describes a method of authenticating a user or user device using data based on social associations and interactions of users and user devices.

### Summary

In view of this, the present invention provides an identity recognition method and device to achieve detection of identity fraud.

For example, the present invention adopts the following technical solutions:
a first aspect provides an identity recognition method, comprising:
collecting big data of address books, the big data of address books comprising address books of multiple users, each address book comprising multiple identity information pairs, and each identity information pair comprising a name and a mobile phone number;
performing statistical analysis on the identity information pairs in the big data of address books to obtain an information weight corresponding to each of the identity information pairs, the information weight indicating a degree of credibility of the identity information pair;
obtaining an information weight corresponding to the identity information pair of a user to be recognized from the statistical analysis result; and
if the obtained information weight satisfies a risk condition, determining that the user to be recognized is a user having a risk,
characterized in that:
   performing said statistical analysis comprises calculating a pagerank value of each of the identity information pairs using a pagerank method, and using the pagerank value as the information weight of the identity information pair,
   wherein each identity information pair is a node in a graph model, an outbound link of a node points to another identity information pair in the address book of the user to which the identity information pair belongs, and an inbound link of a node comes from an identity information pair of a user in an address book comprising the identity information pair corresponding to the node.

A second aspect provides an identity recognition device, comprising:
a data collecting module configured to collect big data of address books, the big data of address books comprising address books of multiple users, each address book comprising multiple identity information pairs, and each identity information pair comprising a name and a mobile phone number;
an information comparing module comprising
a weight statistics obtaining unit configured to perform statistical analysis on the identity information pairs in the big data of address books to obtain an information weight corresponding to each of the identity information pairs, the information weight indicating a degree of credibility of the identity information pair;
a weight obtaining unit configured to obtain an information weight corresponding to the identity information pair of a user to be recognized from the statistical analysis result; and
a risk determining module configured to determine, if the obtained information weight satisfies a risk condition, that the user to be recognized is a user having a risk,
characterized in that:
   said statistical analysis comprises calculating a pagerank value of each of the identity information pairs using a pagerank method, and using the pagerank value as the information weight of the identity information pair,
   wherein each identity information pair is a node in a graph model, an outbound link of a node points to another identity information pair in the address book of the user to which the identity information pair belongs, and an inbound link of a node comes from an identity information pair of a user in an address book comprising the identity information pair corresponding to the node.

The identity recognition method and device according to embodiments of the present invention establish an identity information database by collecting big data of address books, and can determine whether an identity information pair of a name and a mobile phone number is authentic by comparing the identity information pair to be recognized with data in the identity information database, thereby determining whether a user's identity is fraudulent and achieving detection of identity fraud.

### Brief Description of the Drawings

FIG. 1 is a flow chart of an identity recognition method according to some embodiments of the present invention;
FIG. 2 is a schematic diagram of big data of address books of users according to some embodiments of the present invention;
FIG. 3 is a flow chart of another identity recognition method according to some embodiments of the present invention;
FIG. 4 is a schematic structural diagram of an identity recognition device according to some embodiments of the present invention;
FIG. 5 is a schematic structural diagram of another identity recognition device according to some embodiments of the present invention.

### Detailed Description

The embodiments of the present application provide an identity recognition method, which can be used to recognize identity fraud. For example, swindlers assume other people's ID numbers and names, and use mobile phone numbers under their control for account registration and authentication in Internet scenarios, committing fraudulence in credit applications such as credit card or loan applications. To recognize identity fraud even when swindlers bypass recognition models on a network device layer, the present application provides a recognition scheme that "determines whether a mobile phone number used by a user is the mobile phone number normally used by the user."

The basic concept of the recognition scheme is that, after obtaining a sufficient amount of address books of users, an identity recognition entity which is to perform identity recognition on customers has acquired mobile phone numbers of nearly all potential customers, which are used to form an address book database. If subsequently a customer whose identity is to be verified is not in the address book database or has a very low weight when appearing in the database, then it is very likely that it is not the customer himself/herself who uses the identity, and the person using the customer's identity tends to be an imposter.

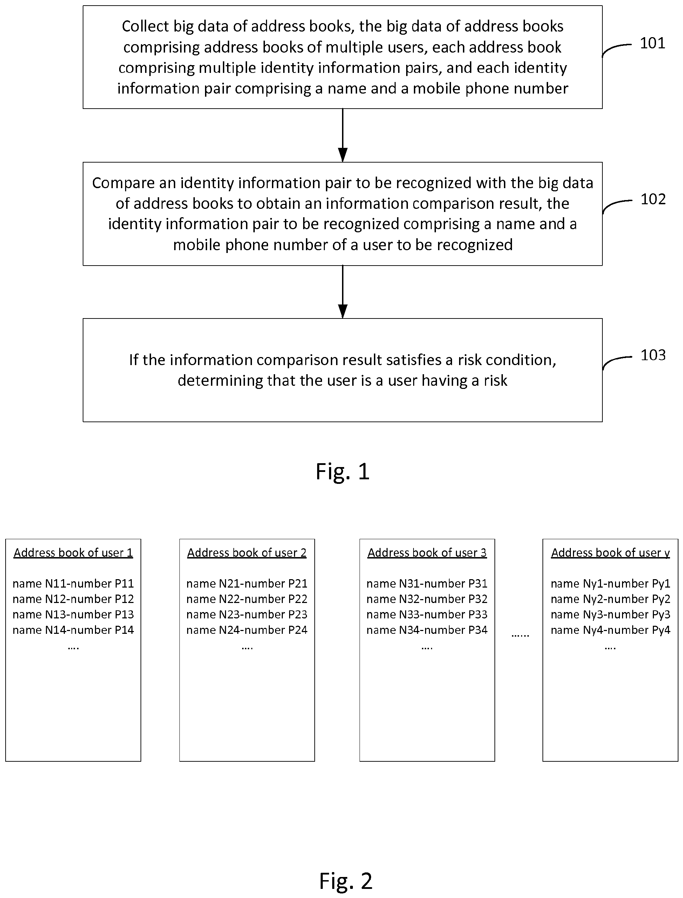

On the basis of the concept above, the identity recognition method according to some embodiments of the present invention has a flow shown in FIG. 1. The method can include the following steps.

Step 101, collecting big data of address books, the big data of address books comprising address books of multiple users, each address book including multiple identity information pairs, and each identity information pair comprising a name and a mobile phone number.

For example, the big data of address books can comprise data of address books of many users. FIG. 2 illustrates data of address books of user 1, user 2, user 3 until user y. The amount of the address books is large enough to cover all potential business customers as much as possible, so that the data of the address books can be used in subsequent steps to perform identity verification on business customers. Each address book comprises multiple identity information pairs, and each identity information pair comprises a name and a mobile phone number. Taking the address book of user 1 as an example, "name N11-number P11" is an identity information pair indicating that the mobile phone number used by the person or entity represented by the name N11 is P11, and "name N12-number P12" is another identity information pair indicating that the mobile phone number used by the person or entity represented by the name N12 is P12.

In this step, the data of address books can be collected through a variety of manners. For example, data of an address book on a user's mobile phone can be collected through client software running on the user's mobile phone.

Step 102, comparing identity information pair to be recognized with the big data of address books to obtain an information comparison result, the identity information to be recognized comprising a name and a mobile phone number of a user to be recognized.

The information comparison result in this step, for example, can be whether the big data of address books includes an identity information pair that is the same as the identity information pair to be recognized, or the number of the identity information pairs in the big data of address books that are the same as the identity information pair to be recognized, etc.

Step 103, if the information comparison result satisfies a risk condition, determining that the user is a user having a risk.

For example, the risk condition may be set as a variety of conditions. For example, the risk condition can be set that a user to be recognized is a user having a risk if the big data of address books does not have an identity information pair that is the same as the identity information pair to be recognized; alternatively, a user to be recognized is a user having a risk if the big data of address books comprises identity information pairs same as the identity information pair to be recognized, but the number of the identity information pairs same as the identity information pair to be recognized is small.

The identity recognition method in the present example establishes an identity information database by collecting big data of address books, and can determine whether an identity information pair of a name and a mobile phone number is authentic according to the big data, thereby determining whether the user's identity is fraudulent and achieving detection of identity fraud.

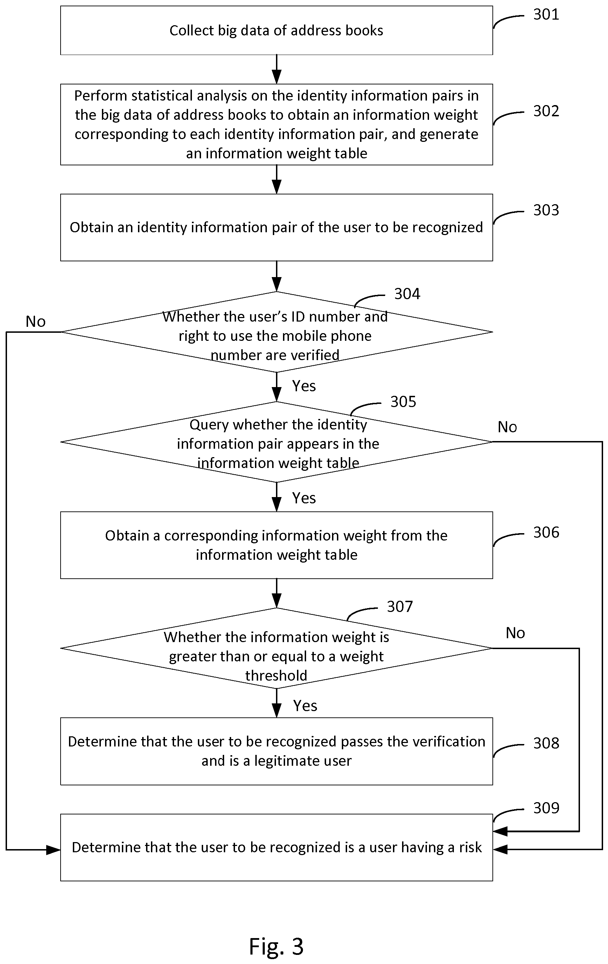

In one example, identity recognition can also be performed according to the method shown in FIG. 3. The method shown in FIG. 3 constructs an information weight table according to the big data of address books. The information weight table can be used for subsequent verification on identities of users. As shown in FIG. 3, the process can comprise the following steps.

Step 301, collecting big data of address books. Step 302, performing statistical analysis on the identity information pairs in the big data of address books to obtain an information weight corresponding to each identity information pair, and generating an information weight table.

The information weight in this step can be used to indicate a degree of credibility of an identity information pair. For example, if an identity information pair of "name N11-number P11" appears in many users' address books, then it is very likely that the information of the identity information pair is authentic and acknowledged by many users; otherwise, it indicates that the identity information pair has a low degree of credibility and the information may be falsified.

The information weights can be calculated according to different methods. Differences among the weights for different identity information pairs can be reflected by different statistics or relationships among the identity information pairs in the address books.

For example, the number of address books comprising an identity information pair can be counted and used as an information weight of the identity information pair. Assuming that the identity information pair of "name N11-number P11" appears in five address books of users, then the corresponding information weight can be five. Assuming that the identity information pair of "name N12-number P12" appears in eight address books, then the corresponding information weight can be eight.

In another example, a pagerank value of each identity information pair can be calculated according to a pagerank method, and the pagerank value is used as an information weight of the identity information pair. Here, when a Web graph model used by the pagerank method is being constructed, each identity information pair can be used as a page node (equivalent to the page node in pagerank), and an outbound link of the page node points to another identity information pair in the address book of the user to which the identity information pair belongs. For example, the user to which the node of "name N11-number P11" belongs is a user having the name of "N11," the user's address book further comprises the identity information pair of "name N12-number P12," and then the outbound link of the node of "name N1 1-number P11" points to the node of "name N12-number P12." An inbound link of a page node comes from identity information pairs of users in address books comprising the identity information pair corresponding to the page node. Similarly, in the example above, the inbound link of the node of "name N12-number P12" is from the node of "name N11-number P11," while the address book of the user in the node of "name N11-number P11" node user comprises the pair of "name N12-number P12."

After the Web graph model is created, the pagerank method can be used to calculate a pagerank value of each identity information pair, and the pagerank value is used as an information weight of the identity information pair.

Here, the calculation using the pagerank method can be based on the following two hypotheses:
Quantity hypothesis: in a Web graph model, the more inbound links from other webpages a page node receives, the more important this page is. In an example of the present application, if an identity information pair is included in more address books, it indicates that the identity information pair is more credible.

Quality hypothesis: different pages have different qualities. A high quality page transfers a heavier weight to other pages via links. Therefore, when pages with higher quality point to another page, the other page is more important. In an example of the present application, the impact of a user to which an address book having the identity information pair belongs is considered. When the identity information pair appears in the address book of a well-known public figure, the degree of credibility of the information in the identity information pair may be different from the degree of credibility when the identity information pair appears in the address book of an unknown ordinary person.

An information weight table shown in Table 1 below can be obtained after the calculation in this step. It should be noted that in the solution of the present application, the generated information weight table mainly includes identity information pairs and corresponding information weights. The identity information pairs and their information weights may be stored in a data structure other than a table.

**Table 1 Information weight table**

| Identity information pairs | | |
|---|---|---|
| Name | Number | Information weight |
| N11 | P11 | t1 |
| N12 | P12 | t2 |
| ... | ... | ... |

In addition, there may be nonstandard records in the identity information pairs recorded in an address book. For example, a user's real name is "Wang, Xiaoyue" e.g., " 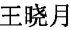 " in Chinese. But when recording the user's name and mobile phone number, a friend of the user accidentally enters " 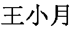 " [English translation: Wang, Xiaoyue] i.e., a typo in " 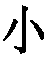 " [English translation: Xiao]. In this case, inconsistency correction processing can be performed to correct the inconsistency that occurs in different address books during recording of an originally identical identity information pair. In one example, the situation can be processed in the following manner: before performing statistical calculation of information weights for the identity information pairs in the big data of address books, when recording identity information pairs in the information weight table, the pairs of " 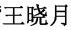 [English translation: Wang, Xiaoyue] -number H" and " 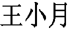 [English translation: Wang, Xiaoyue] -number H" are both recorded as the same pair of "wangxiaoyue-number H," namely treating the Chinese names " 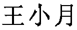 " [English translation: Wang, Xiaoyue] and " 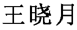 " [English translation: Wang, Xiaoyue] as the same identity information, and the information weight corresponding to the identity information pair of "wangxiaoyue-number H" can be 2 (i.e., "wangxiaoyue-number H" appears twice in the data of address books). When an identity information pair to be recognized is subsequently compared with the information weight table, a matching number "H" is first found according to the number in the identity information pair to be recognized, and then the name is converted to pinyin to check if there is a matching name in pinyin. This way, the calculation of information weights can become more accurate. However, the inconsistency correction processing may be applied to other types of errors according to actual business situations or experiments.

In addition, other implementation manners may be used. For example, in the case of the above example where the pinyin of the names is the same, the Chinese characters of the names are different, and the numbers are the same, a pinyin character string can be recorded in the information weight table to correct the inconsistency. In other embodiments, when no typos occur, Chinese characters can be used to record the names in the information weight table. To recognize an identity information pair, a matching number H is found in the information weight table first according to the number in the pair. Subsequently, it is first determined whether a matching name in Chinese character can be found, and if there is no matching name in Chinese character, the name is converted to pinyin to check if there is a matching name in pinyin. When both the name and the number in the pair are matched, a matching identity information pair is found, and a corresponding information weight can be obtained.

In another example, when looking for a matching identity information pair, a matching manner that allows errors in a certain range can also be used. For example, what is recorded in the information weight table is "xiaoyue-number H" (i.e., the last name is missing), and the identity information pair to be recognized is " 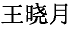 [English translation: Wang, Xiaoyue] -number H." It is found during matching that the numbers in these two identity information pairs are both "H," and can be matched. Further, in the name field, "xiaoyue" is very similar to the pinyin of " 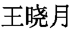 " [English translation: Wang, Xiaoyue] i.e., "wangxiaoyue." For example, according to an algorithm, the similarity between the names is calculated and reaches above 70%, Then it may be determined that "xiaoyue" matches " 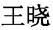 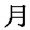 " [English translation: Wang, Xiaoyue]. In this case, a similarity threshold can be set. When the similarity between two names is higher than the threshold, the two names are regarded as matching each other even though they are not identical. With regard to "xiaoyue" and "Wang, Jiahui ( 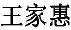 )," on the other hand, the two names are substantially different and the similarity between them is lower than the threshold, and thus they are determined to be not matching.

On the basis of the generated information weight table, the information weight table will be used in the following steps for identity information recognition. An identity information pair to be recognized can be compared with the pre-generated information weight table to obtain an information comparison result. The identity information pair to be recognized comprises a name and a mobile phone number of a user to be recognized. If the information comparison result satisfies a risk condition, it is determined that the user is a user having a risk.

Step 303, obtaining an identity information pair of the user to be recognized.

For example, some identity information of a user who is registering can be obtained to recognize whether the user is a defrauder who assumes another person's identity. The identity information may comprise an ID number, a name, a mobile phone number, an address, and other contact information, where the name and mobile phone number can be referred to as an identity information pair in the present example.

Step 304, verifying the user's ID number and right to use the mobile phone number.

In this step, the ID number and name can be verified through the public security network based on real names. Alternatively, a facial comparison can be performed between the user's face and the photo on the public security network associated with the ID. In addition, the verification can be performed in other forms. Furthermore, the user's mobile phone number can be verified to ensure that the user owns the right to use the mobile phone number at present.

If the verification is passed in this step, the method proceeds to Step 305; otherwise, the method proceeds to Step 309.

Step 305, querying whether the identity information pair of the user to be recognized appears in the information weight table.

If the identity information pair appears in the information weight table, the method proceeds to Step 306; otherwise, if the information weight table does not include the identity information pair of the user to be recognized, the method proceeds to Step 309.

Step 306, obtaining a corresponding information weight from the information weight table.

For example, an information weight corresponding to the identity information pair found in Step 303 can be obtained from the pre-generated information weight table.

Step 307, determining whether the information weight is greater than or equal to a weight threshold.

Assuming that the weight threshold is t0, the weight threshold can be set according to factors such as the coverage of all potential customers by the amount of big data collected for generating the information weight table, the degree of the control of identity fraud risk by the business entity using this identity recognition method, and the like. For example, assuming that the business entity strictly controls users' identities, the weight threshold may be set at a large value to ensure high information authenticity and reliability. In another example, if the amount of the collected big data has a low coverage of all potential customers, the weight threshold may be set at a large value to improve the information authenticity and reliability.

If a determining result in this step is yes, the method proceeds to Step 308; otherwise, the method proceeds to Step 309.

Step 308, determining that the user to be recognized passes the verification and is a legitimate user.

Step 309, determining that the user to be recognized is a user having a risk.

After the user is determined to be a user having a risk, the fraud operation of the user can be located accordingly.

The identity recognition method in the present example creates an information weight table according to big data of address books, determines credibility of each identity information pair in advance, and can determine, based on a weight threshold, whether an identity information pair of a name and a mobile phone number is authentic, thereby determining whether the user's identity is fraudulent and achieving detection of identity fraud.

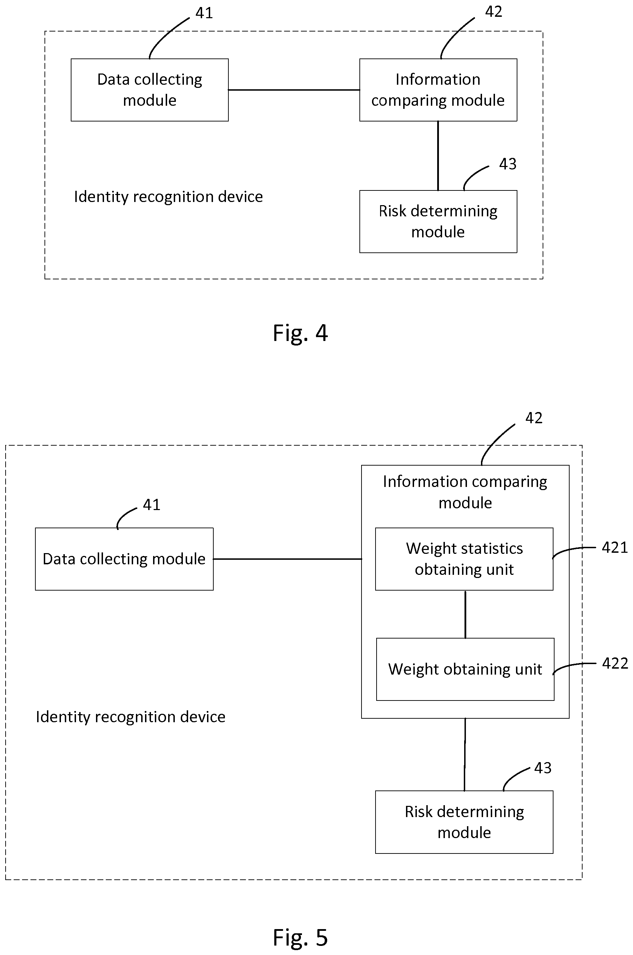

To implement the above method, the embodiments of the present application provide an identity recognition device, as shown in FIG. 4. The device can comprise: a data collecting module 41, an information comparing module 42, and a risk determining module 43.

The data collecting module 41 is configured to collect big data of address books, the big data of address books comprising address books of multiple users, each address book including multiple identity information pairs, and each identity information pair comprising a name and a mobile phone number.

The information comparing module 42 is configured to compare an identity information pair to be recognized with the big data of address books to obtain an information comparison result, the identity information pair to be recognized comprising a name and a mobile phone number of a user to be recognized.

The risk determining module 43 is configured to determine that the user to be recognized is a user having a risk if the information comparison result satisfies a risk condition.

In one example, as shown in FIG. 5, the information comparing module 42 in the device can comprise:
a weight statistics obtaining unit 421 configured to performing statistical analysis on the identity information pairs in the big data of address books to obtain an information weight corresponding to each identity information pair, the information weight being used to indicate a degree of credibility of the identity information pair; and a weight obtaining unit 422 configured to obtain an information weight corresponding to the identity information pair to be recognized based on a statistical analysis result.

In one example, the risk determining module 43 is configured to, for example, if the statistical analysis result does not have an information weight corresponding to the identity information pair to be recognized, or if the information weight corresponding to the identity information pair to be recognized is lower than a preset weight threshold, determine that the user to be recognized is a user having a risk.

In one example, the weight statistics obtaining unit 421 is configured to, for example, use the number of address books comprising the identity information pair as an information weight of the identity information pair; alternatively, calculate a pagerank value of each identity information pair using a pagerank method, and use the pagerank value as an information weight of the identity information pair.

In one example, the weight statistics obtaining unit 421 is further configured to perform inconsistency correction processing on identity information pairs in different address books before analyzing the identity information pairs in the big data of address books.

The identity recognition device in the present example creates an information weight table according to big data of address books, determines credibility of each identity information pair in advance, and can determine, based on a weight threshold, whether an identity information pair of a name and a mobile phone number is authentic, thereby determining whether the user's identity is fraudulent and achieving detection identity fraud.

Only preferred embodiments of the present invention are described above, which are not used to limit the present invention.

## Claims

1. An identity recognition method, comprising:
collecting (301) big data of address books, the big data of address books comprising address books of multiple users, each address book comprising multiple identity information pairs, and each identity information pair comprising a name and a mobile phone number;
performing statistical analysis (302) on the identity information pairs in the big data of address books to obtain an information weight corresponding to each of the identity information pairs, the information weight indicating a degree of credibility of the identity information pair;
obtaining (305) an information weight corresponding to the identity information pair of a user to be recognized from the statistical analysis result; and
if the obtained information weight satisfies a risk condition (307), determining (309) that the user to be recognized is a user having a risk,
**characterized in that**:
performing said statistical analysis comprises calculating a pagerank value of each of the identity information pairs using a pagerank method, and using the pagerank value as the information weight of the identity information pair,
wherein each identity information pair is a node in a graph model, an outbound link of a node points to another identity information pair in the address book of the user to which the identity information pair belongs, and an inbound link of a node comes from an identity information pair of a user in an address book comprising the identity information pair corresponding to the node.

2. The method according to claim 1, wherein said risk condition is a preset weight threshold.

3. The method according to claim 1, wherein, before performing statistical analysis on the identity information pairs in the big data of address books, the method further comprises:
performing inconsistency correction processing on identity information pairs in different address books.

4. An identity recognition device, comprising:
a data collecting module (41) configured to collect big data of address books, the big data of address books comprising address books of multiple users, each address book comprising multiple identity information pairs, and each identity information pair comprising a name and a mobile phone number;
an information comparing module (42) comprising
a weight statistics obtaining unit (421) configured to perform statistical analysis on the identity information pairs in the big data of address books to obtain an information weight corresponding to each of the identity information pairs, the information weight indicating a degree of credibility of the identity information pair;
a weight obtaining unit (422) configured to obtain an information weight corresponding to the identity information pair of a user to be recognized from the statistical analysis result; and
a risk determining module (43) configured to determine, if the obtained information weight satisfies a risk condition, that the user to be recognized is a user having a risk,
**characterized in that**:
said statistical analysis comprises calculating a pagerank value of each of the identity information pairs using a pagerank method, and using the pagerank value as the information weight of the identity information pair,
wherein each identity information pair is a node in a graph model, an outbound link of a node points to another identity information pair in the address book of the user to which the identity information pair belongs, and an inbound link of a node comes from an identity information pair of a user in an address book comprising the identity information pair corresponding to the node.

5. The device according to claim 4, wherein the risk determining module is configured to determine that the user to be recognized is a user having a risk if the information weight corresponding to the identity information pair to be recognized is lower than a preset weight threshold.

6. The device according to claim 4, wherein the weight statistics obtaining unit is further configured to perform inconsistency correction processing on identity information pairs in different address books before performing statistical analysis on the identity information pairs in the big data of address books.

## Patentansprüche

1. Identitätserkennungsverfahren, Folgendes umfassend:
Erfassen (301) von Big Data von Adressbüchern, wobei die Big Data von Adressbüchern Adressbücher mehrerer Nutzer umfassen, wobei jedes Adressbuch mehrere Identitätsinformationspaare umfasst, und wobei jedes Identitätsinformationspaar einen Namen und eine Mobilfunknummer umfasst,
Durchführen einer statistischen Analyse (302) an den Identitätsinformationspaaren in den Big Data von Adressbüchern, um eine Informationsgewichtung zu erzielen, die jedem der Identitätsinformationspaare entspricht, wobei die Informationsgewichtung ein Maß an Glaubwürdigkeit des Identitätsinformationspaars angibt,
Erzielen (305) einer Informationsgewichtung, die dem Identitätsinformationspaar eines Nutzers entspricht, der aus dem Ergebnis der statistischen Analyse zu erkennen ist, und
falls die erzielte Informationsgewichtung eine Risikobedingung (307) erfüllt, Bestimmen (309), dass der zu erkennende Nutzer ein Nutzer mit einem Risiko ist,
**dadurch gekennzeichnet, dass**:
das Durchführen der statistischen Analyse das Berechnen eines PageRank-Wertes von jedem der Identitätsinformationspaare unter Verwendung eines PageRank-Verfahrens und das Verwenden des PageRank-Wertes als die Informationsgewichtung des Identitätsinformationspaars umfasst,
wobei jedes Identitätsinformationspaar ein Knoten in einem Kurvenmodell ist, wobei ein ausgehender Link eines Knotens zu einem anderen Identitätsinformationspaar in dem Adressbuch des Nutzers weist, zu dem das Identitätsinformationspaar gehört, und ein eingehender Link eines Knotens von einem Identitätsinformationspaar eines Nutzers in einem Adressbuch kommt, welches das Identitätsinformationspaar umfasst, das dem Knoten entspricht.

2. Verfahren nach Anspruch 1, wobei die Risikobedingung ein voreingestellter Gewichtungsgrenzwert ist.

3. Verfahren nach Anspruch 1, wobei das Verfahren vor dem Durchführen der statistischen Analyse an den Identitätsinformationspaaren in den Big Data von Adressbüchern ferner Folgendes umfasst:
Durchführen einer Unstimmigkeitskorrekturverarbeitung an Identitätsinformationspaaren in verschiedenen Adressbüchern.

4. Identitätserkennungsvorrichtung, Folgendes umfassend:
ein Datenerfassungsmodul (41), das konfiguriert ist, um Big Data von Adressbüchern zu erfassen, wobei die Big Data von Adressbüchern Adressbücher mehrerer Nutzer umfassen, wobei jedes Adressbuch mehrere Identitätsinformationspaare umfasst, und wobei jedes Identitätsinformationspaar einen Namen und eine Mobilfunknummer umfasst,
ein Informationenvergleichsmodul (42), Folgendes umfassend:
eine Einheit (421) zum Erzielen einer Gewichtungsstatistik, die konfiguriert ist, um eine statistische Analyse an den Identitätsinformationspaaren in den Big Data von Adressbüchern durchzuführen, um eine Informationsgewichtung zu erzielen, die jedem der Identitätsinformationspaare entspricht, wobei die Informationsgewichtung ein Maß an Glaubwürdigkeit des Identitätsinformationspaars angibt,
eine Einheit (422) zum Erzielen einer Gewichtung, die konfiguriert ist, um eine Informationsgewichtung zu erzielen, die dem Identitätsinformationspaar eines Nutzers entspricht, der aus dem Ergebnis einer statistischen Analyse zu erkennen ist, und
ein Risikobestimmungsmodul (43), das konfiguriert ist, um zu bestimmen, falls die erzielte Informationsgewichtung eine Risikobedingung erfüllt, dass der zu erkennende Nutzer ein Nutzer mit einem Risiko ist,
**dadurch gekennzeichnet, dass**:
die statistische Analyse das Berechnen eines PageRank-Wertes von jedem der Identitätsinformationspaare unter Verwendung eines PageRank-Verfahrens und das Verwenden des PageRank-Wertes als die Informationsgewichtung des Identitätsinformationspaars umfasst,
wobei jedes Identitätsinformationspaar ein Knoten in einem Kurvenmodell ist, wobei ein ausgehender Link eines Knotens zu einem anderen Identitätsinformationspaar in dem Adressbuch des Nutzers weist, zu dem das Identitätsinformationspaar gehört, und ein eingehender Link eines Knotens von einem Identitätsinformationspaar eines Nutzers in einem Adressbuch kommt, welches das Identitätsinformationspaar umfasst, das dem Knoten entspricht.

5. Vorrichtung nach Anspruch 4, wobei das Risikobestimmungsmodul konfiguriert ist, um zu bestimmen, dass der zu erkennende Nutzer ein Nutzer mit einem Risiko ist, falls die Informationsgewichtung, die dem zu erkennenden Identitätsinformationspaar entspricht, kleiner als ein voreingestellter Gewichtungsgrenzwert ist.

6. Vorrichtung nach Anspruch 4, wobei die Einheit zum Erzielen einer Gewichtungsstatistik ferner konfiguriert ist, um eine Unstimmigkeitskorrekturverarbeitung an Identitätsinformationspaaren in verschiedenen Adressbüchern durchzuführen, bevor eine statistische Analyse an den Identitätsinformationspaaren in den Big Data von Adressbüchern durchgeführt wird.

## Revendications

1. Procédé de reconnaissance d'identité comprenant les étapes consistant à :
collecter (301) des mégadonnées de carnets d'adresses, les mégadonnées de carnets d'adresses comprenant des carnets d'adresses de plusieurs utilisateurs, chaque carnet d'adresses comprenant plusieurs paires d'informations d'identité, et chaque paire d'informations d'identité comprenant un nom et un numéro de téléphone mobile ;
effectuer une analyse statistique (302) sur les paires d'informations d'identité dans les mégadonnées de carnets d'adresses pour obtenir un poids d'information correspondant à chacune des paires d'informations d'identité, le poids d'information indiquant un degré de crédibilité de la paire d'informations d'identité ;
obtenir (305) un poids d'information correspondant à la paire d'informations d'identité d'un utilisateur à reconnaître à partir du résultat d'analyse statistique ; et
si le poids d'information obtenu satisfait à une condition de risque (307), déterminer (309) que l'utilisateur à reconnaître est un utilisateur présentant un risque,
**caractérisé en ce que** :
le fait d'effectuer ladite analyse statistique comprend le calcul d'une valeur de pagerank pour chacune des paires d'informations d'identité à l'aide d'un procédé de pagerank, et l'utilisation de la valeur de pagerank comme poids d'information de la paire d'informations d'identité,
dans lequel chaque paire d'informations d'identité est un noeud dans un modèle de graphe, un lien sortant d'un noeud pointe vers une autre paire d'informations d'identité dans le carnet d'adresses de l'utilisateur auquel la paire d'informations d'identité appartient, et un lien entrant d'un noeud provient d'une paire d'informations d'identité d'un utilisateur dans un carnet d'adresses comprenant la paire d'informations d'identité correspondant au noeud.

2. Procédé selon la revendication 1, dans lequel ladite condition de risque est un seuil de poids préétabli.

3. Procédé selon la revendication 1, dans lequel, avant d'effectuer une analyse statistique sur les paires d'informations d'identité dans les mégadonnées de carnets d'adresses, le procédé comprend en outre l'étape consistant à :
effectuer un traitement de correction d'incohérences sur des paires d'informations d'identité dans différents carnets d'adresses.

4. Dispositif de reconnaissance d'identité comprenant :
un module de collecte de données (41) configuré pour collecter des mégadonnées de carnets d'adresses, les mégadonnées de carnets d'adresses comprenant des carnets d'adresses de plusieurs utilisateurs, chaque carnet d'adresses comprenant plusieurs paires d'informations d'identité, et chaque paire d'informations d'identité comprenant un nom et un numéro de téléphone mobile ;
un module de comparaison d'informations (42) comprenant
une unité d'obtention de statistiques de poids (421) configurée pour effectuer une analyse statistique sur les paires d'informations d'identité dans les mégadonnées de carnets d'adresses pour obtenir un poids d'information correspondant à chacune des paires d'informations d'identité, le poids d'information indiquant un degré de crédibilité de la paire d'informations d'identité ;
une unité d'obtention de poids (422) configurée pour obtenir un poids d'information correspondant à la paire d'informations d'identité d'un utilisateur à reconnaître à partir du résultat d'analyse statistique ; et
un module de détermination de risque (43) configuré pour déterminer, si le poids d'information obtenu satisfait à une condition de risque, que l'utilisateur à reconnaître est un utilisateur présentant un risque,
**caractérisé en ce que** :
ladite analyse statistique comprend le calcul d'une valeur de pagerank pour chacune des paires d'informations d'identité à l'aide d'un procédé de pagerank, et l'utilisation de la valeur de pagerank comme poids d'information de la paire d'informations d'identité,
dans lequel chaque paire d'informations d'identité est un noeud dans un modèle de graphe, un lien sortant d'un noeud pointe vers une autre paire d'informations d'identité dans le carnet d'adresses de l'utilisateur auquel la paire d'informations d'identité appartient, et un lien entrant d'un noeud provient d'une paire d'informations d'identité d'un utilisateur dans un carnet d'adresses comprenant la paire d'informations d'identité correspondant au noeud.

5. Dispositif selon la revendication 4, dans lequel le module de détermination de risque est configuré pour déterminer que l'utilisateur à reconnaître est un utilisateur présentant un risque si le poids d'information correspondant à la paire d'informations d'identité à reconnaître est inférieur à un seuil de poids préétabli.

6. Dispositif selon la revendication 4, dans lequel l'unité d'obtention de statistiques de poids est en outre configurée pour effectuer un traitement de correction d'incohérences sur des paires d'informations d'identité dans différents carnets d'adresses avant d'effectuer une analyse statistique sur les paires d'informations d'identité dans les mégadonnées de carnets d'adresses.
